Europäisches Patentamt

(19) European Patent Office

Office européen des brevets

(11) Publication number: **0 016 576**
**B1**

(12) **EUROPEAN PATENT SPECIFICATION**

(45) Date of publication of patent specification: **16.06.82**

(21) Application number: **80300660.0**

(22) Date of filing: **05.03.80**

(51) Int. Cl.³: **F 17 C 11/00, C 01 B 3/00, F 17 C 13/00**

(54) Modular hydride container.

(30) Priority: **12.03.79 US 19658**

(43) Date of publication of application:
**01.10.80 Bulletin 80/20**

(45) Publication of the grant of the patent:
**16.06.82 Bulletin 82/24**

(84) Designated Contracting States:
**DE FR GB IT**

(56) References cited:
**US - A - 4 133 426**

(73) Proprietor: **MPD Technology Limited**
**Thames House Millbank**
**London SW1P 4QF (GB)**

(72) Inventor: **Turillon, Pierre Paul**
**38 Skytop Drive**
**Ramsey New Jersey 07446 (US)**

(74) Representative: **Lockwood, Barbara Ann et al,**
**Thames House (Fifth Floor) Millbank**
**London SW1P 4QF (GB)**

Courier Press, Leamington Spa, England.

Modular hydride container

The present invention relates to a hydrogen containment unit which includes solid hydridable material which reversibly reacts with hydrogen in a given temperature range under the influence of pressure.

Solid hydridable materials are characterised by an interrelation of temperature, pressure and hydrogen content, such that, at any given temperature, the hydrogen content of the hydridable material is determined by the partial pressure of the hydrogen in contact with that material. Generally, as temperature rises it takes a greater partial pressure of hydrogen to maintain a given concentration of hydrogen in the hydridable material. The converse is true as temperature decreases. As hydrogen combines with the hydridable material, heat is given off, i.e. the reaction is exothermic. Conversely, when hydrogen is released from hydridable material it absorbs heat and the reaction is endothermic. For these reasons it is necessary that good heat transfer is available between the site of the hydriding or dehydriding reaction and the walls of the container. Also, it is necessary to provide gas paths which extend throughout the mass of the hydridable material.

The present invention is based on the discovery that by dividing the hydridable material into a plurality of separate masses located in a particular structure these requirements of gas path and heat transfer can be readily met.

According to the present invention a hydrogen containment unit comprises a container for hydrogen gas having means for the admittance and withdrawal of gaseous hydrogen, and having a plurality of trays stacked in a non-nesting configuration within the container each tray being made of a hydride resistant material having good heat conductivity and having one or more depressed zone in which a solid hydridable material is located. The container is preferably a conventional steel pressure bottle having inlet-outlet means, for example valved piping, through which gaseous hydrogen can be introduced into, or drawn from, the container. The results of the conventional container, the conventional means for introducing and removing gaseous hydrogen from the container and the multiplicity of trays in the container arranged in non-nesting fashion is a labyrinth of gas transport passages extending through the container and a heat transfer network extending throughout the bulk of the volume of the containment unit. Preferably the trays abut on, or are otherwise in heat conductive relationship with the walls of the container. The solid hydridable material is normally used in powder form.

The invention will now be more particularly described by reference to the accompanying drawings in which:

Figure 1 is a cross-sectional view of a tray-like device used in the containment unit of the present invention,

Figure 2 is a perspective view of a pair of the tray-like devices shown in Figure 2, and

Figure 3 is a perspective view of an alternative form of a tray-like device used in the containment units of the present invention.

In all drawings the hydrogen container and the piping and valving have been omitted.

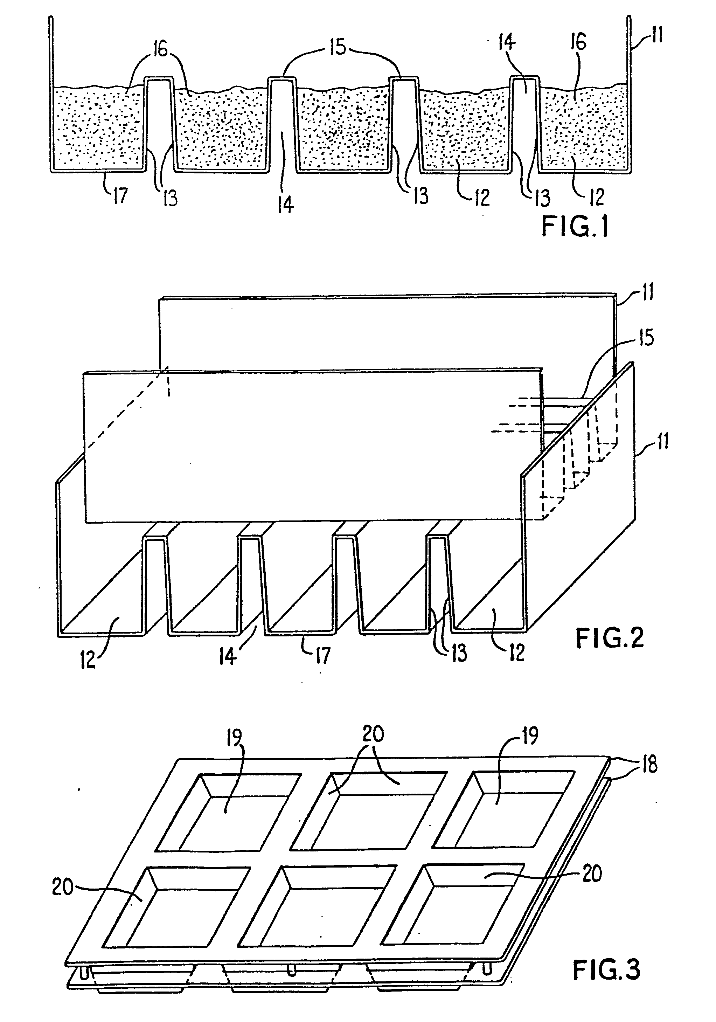

Figure 1 illustrates, in cross-section, tray 11 conveniently made of heat conductive metal, such as aluminium, copper or stainless steel, which is resistant to the effects of a hydrogen atmosphere and exhibits a thermal conductivity of greater than (0.4)/sec.°C (0.1 cal/sec.°C) when measured through a plate 1 cm across of area of 1 cm² within the temperature range of hydrogen storage. Tray 11 includes depressed zones 12 having walls 13 which define gas passages 14. Gas passages 14 are bounded by walls 13, wall heads 15 and cooperating portions of adjacent trays as shown in Figure 2. Hydridable material 16 rests in depressed zones 12 as shown in Figure 1. It is advantageous that the trays be formed so that bottom 17 of zones 12 are smaller in area than the tops of zones 12. This permits freedom of motion of powdered hydridable material 16 during the expansion attending the hydriding reaction and minimizes localized pressure which might tend to distort tray 11. A variation of tray 11 is shown as tray 18 in Figure 3. Depressed zones 19 in Figure 3 have smoothly sloping side walls 20 and greater top area than bottom area.

Other shapes of tray may of course be used, and the shape and dimensions of the depressed zones holding the hydridable material may also be varied. The hydridable material is advantageously metal alloys or intermetallic compounds. They can be any of the HY—STOR (Trade Mark) materials sold by MPD Technology Limited of Wiggin Street, Birmingham, for example alloys having the chemical formulae FeTi, $(Fe_{0.9}Mn_{0.1})Ti$, $(Fe_{0.8}Ni_{0.2})Ti$, $CaNi_5$, $(Ca_{0.7}M_{0.3})Ni_5$, $(Ca_{0.2}M_{0.8})$ $Ni_5$, $MNi_5$, $LaNi_5$, $(CFM)Ni_5$, $LaNi_{4.7}Al_{0.3}$, $MNi_{4.5}Al_{0.5}$, $Mg_2Ni$ and $Mg_2Cu$ (M = mischmetal and CFM = cerium free mischmetal). Other reversible hydride-forming materials, either metals or non-metals may also be used.

**Claims**

1. A hydrogen containment unit comprising a container for hydrogen gas having means for the admittance and withdrawal of the gas and containing solid hydridable material (16) characterised in that a plurality of trays (11) are stacked in a non-nesting assembly within the container, each tray (11) being made of a hydrogen resistant material having good heat conductivity and having one or more depressed zone (12) in which the hydridable material (16) is located.

2. A containment unit as claimed in claim 1 in which the trays (11) are made of metal.

3. A containment unit as claimed in claim 1 or claim 2 in which the trays (11) abut on or are otherwise in heat transfer relationship with the walls of the container.

4. A containment unit as claimed in any preceding claim in which the solid hydridable material is a powder.

5. A containment unit as claimed in any preceding claim in which the hydridable material is an alloy or an intermetallic compound.

6. A containment unit as claimed in any preceding claim in which the depressed zones (12) of the trays (11) have walls (13) with sloping sides so that the area of the bottom of the depressed zone (12) is smaller than the area of the top of the zone (12).

## Revendications

1. Réservoir d'hydrogène comprenant un conteneur d'hydrogène gazeux, muni de dispositifs d'introduction et de retrait du gaz et qui contient une matière solide hydrurable (16), caractérisé en ce que plusieurs plateaux (11) sont empilés sans être emboîtés à l'intérieur du conteneur, chaque plateau (11) étant constitué d'un matériau résistant à l'hydrogène, présentant une bonne conductivité thermique et comprenant une ou plusieurs zones de dépression (12) dans lesquelles la matière hydrurable (16) est placée.

2. Réservoir selon la revendication 1, caractérisé en ce que les plateaux (11) sont métalliques.

3. Réservoir selon l'une des revendications 1 et 2, caractérisé en ce que les plateaux (11) butent sur, ou sont d'une autre manière en contact thermique avec les parois du conteneur.

4. Réservoir selon l'une des revendications 1 à 3, caractérisé en ce que la matière hydrurable solide est une poudre.

5. Réservoir selon l'une des revendications 1 à 4, caractérisé en ce que la matière hydrurable est un alliage ou un composé intermétallique.

6. Réservoir selon l'une des revendications 1 à 5, caractérisé en ce que les zones de dépression (12) des plateaux (11) ont des parois latérales (13) en pente telles que la surface du fond de la zone de dépression (12) soit plus petite que la surface dans le haut de la zone (12).

## Patentansprüche

1. Wasserstoffaufnahmeeinheit, bestehend aus einem Behälter für Wasserstoffgas, der eine Einrichtung zum Einlassen und Entnehmen des Gases hat und ein hydridierbares Festmaterial (16) enthält, dadurch gekennzeichnet, daß mehrere Tabletts (11) in einer nicht verschachtelten Baugruppe im Behälter gestapelt sind, wobei jedes Tablett (11) aus einem wasserstoffbeständigen Material mit guter Wärmeleitfähigkeit besteht und eine oder mehrere Vertiefungen (12) aufweist, in denen sich das hydridierbare Material (16) befindet.

2. Aufnahmeeinheit nach Patentanspruch 1, bei der die Tabletts (11) aus Metall hergestellt sind.

3. Aufnahmeeinheit nach Patentanspruch 1 oder Patentanspruch 2, bei der die Tabletts (11) an die Behälterwände anstoßen oder sich in einer anderweitigen Wärmeübertragungsbeziehung zu diesen befinden.

4. Aufnahmeeinheit nach irgendeinem der voranstehenden Patentansprüche, bei der das hydridierbare Festmaterial ein Pulver ist.

5. Aufnahmeeinheit nach irgendeinem der voranstehenden Patentansprüche, bei der das hydridierbare Material eine Legierung oder eine Intermetallverbindung ist.

6. Aufnahmeeinheit nach irgendeinem der voranstehenden Patentansprüche, bei der die Vertiefungen (12) der Tablette (11) abgeschrägte Wände (13) haben, so daß der Bereich am Boden der Vertiefung (12) kleiner ist als der oben an der Vertiefung (12).

0 016 576

FIG.1

FIG.2

FIG.3